# FASCICULE DE BREVET EUROPEEN

(11) **EP 2 801 204 B1**
(45) Date de publication et mention de la délivrance du brevet: **15.11.2017**
(21) Numéro de dépôt: 13702751.2
(22) Date de dépôt: 04.01.2013
(51) Int. Cl.: H04N 21/262, H04N 21/84, H04N 21/236

(54) **DISPOSITIF ET PROCEDE POUR LA RECEPTION D'UN FLUX MULTIPLEXE DIFFUSANT UNE TABLE PMT INCLUANT UN PID POUR IDENTIFIER DES DOCUMENTS AUDIOVISUELS SANS CONTRAINTES TEMPORELLES**
EINRICHTUNG UND VERFAHREN ZUM EMPFANGEN EINES MULTIPLEXSTROMES MIT EINER TABELLE PMT UND EINEM DESKRIPTOR, UM AUDIO-VIDEO DATEN OHNE TEMPORALER BEGREZUNGEN ZU IDENTIFIZIEREN
DEVICE AND METHOD FOR RECEIVING A MULTIPLEXED STREAM COMPRISING A PMT TABLE INCLUDING A DESCRIPTOR FOR IDENTIFYING AUDIOVISUAL DATA WITHOUT TEMPORAL CONSTRAINTS

(30) Priorité: 05.01.2012 FR 1250139; 06.01.2012 FR 1250178
(43) Date de publication de la demande: 12.11.2014
(73) Titulaire: TDF, 92541 Montrouge Cedex (FR)
(72) Inventeur: VINCENT, David, F-35150 Amanlis (FR); BEAUCHAMP, Frédéric, F-35530 Noyal sur Vilaine (FR); COURBOULAY, Philippe, F-35000 Rennes (FR); BATTAS, Xavier, F-92100 Boulogne (FR)
(74) Mandataire: Vidon Brevets & Stratégie
(86) Numéro de dépôt international: PCT/EP2013/050123
(87) Numéro de publication internationale: WO 2013/102671

(56) Documents cités:
- EP-A2- 1 463 316
- US-A1- 2008 250 454
- ISO/IEC: "ISO/IEC 13818-1. INFORMATION TECHNOLOGY - GENERIC CODING OF MOVING PICTURES AND ASSOCIATED AUDIO INFORMATION: SYSTEMS. // TECHNOLOGIES DE L'INFORMATION - CODAGE GÉNÉRIQUE DES IMAGES ANIMÉES ET DU SON ASSOCIÉ: SYSTÈMES - Recommendation ITU-T H.222.0 (2000E)", INTERNATIONAL STANDARD ISO/IEC,, vol. 13818-1, 1 décembre 2000 (2000-12-01) , pages I-XVII,1, XP002601409,

## Description

### 1. Domaine de l'invention

L'invention concerne un procédé de génération d'un flux organisé en paquets de données successifs, un procédé de réception dudit flux et des appareils pour la mise en oeuvre du procédé. La présente invention se rapporte au domaine de la diffusion de documents audiovisuels sur des réseaux de communication numérique. Par documents audiovisuels, on entend tout type de contenu multimédia tels que de la vidéo, de l'audio, des données. La présente invention se rapporte plus particulièrement à un procédé de transmission de flux de documents audiovisuels transmis en mode « PUSH ».

### 2. Art antérieur

De nos jours, il existe de nombreux moyens de réaliser la transmission de contenus numériques, parmi lesquels les techniques se basant sur les standards issus des consortiums DVB (de l'anglais « Digital Video Broadcast » pour « Diffusion Video Numérique »). D'autres techniques de transmission de contenus sont aussi utilisées avec des réseaux fonctionnant à l'aide du protocole IP (de l'Anglais « Internet Protocol » pour « Protocole Internet »). Ces contenus sont transmis à l'aide d'un support matériel (un câble par exemple) ou immatériel (un réseau sans fil, généralement radio).

Des réseaux de diffusion de télévision numérique terrestre, encore appelée TNT, mettant en oeuvre la norme DVB-T ("Digital Video Broadcasting - Terrestrial" pour "diffusion vidéo numérique terrestre"), sont aujourd'hui déployés en France, en Europe, et dans plusieurs autres Etats du monde. La diffusion de paquets de données est spécifiée par des standards de façon à être reçu par un grand nombre de récepteurs de tout type. Le réseau (terrestre, satellite ou câble) diffuse des contenus audiovisuels plus communément appelés « service » et des données destinées à les référencer. Ces données sont par exemple définies dans les spécifications DVB-SI ('Digital Video Broadcast - specification for Service Information') ou encore 'diffusion de vidéo numérique - spécification des Données de Service' EN 300 468 V1.3.1 (éditée par l'ETSI) et les spécifications MPEG ISO/CEL 13818-1 «Technologies de l'information - codage générique des images animées et du son associé : Système ». Ces informations de service se présentent sous la forme de tables et de descripteurs qui décrivent les objets émis sur le réseau de transmission.

Des services particuliers de « Video On Demand » permettent à des utilisateurs de télécharger des documents audiovisuels. Pour cela, le terminal de l'utilisateur se connecte à un site de téléchargement, reçoit le catalogue des documents disponibles et le présente à l'écran. L'utilisateur navigue dans le menu, sélectionne un contenu et commande son téléchargement. Lorsque le document est destiné à être mémorisé dans le terminal, son téléchargement n'est pas contraint par le temps. Le téléchargement peut par exemple, s'effectuer la nuit. Le lendemain, l'utilisateur dispose de son document et peut le reproduire, le temps de téléchargement n'a donc pas d'incidence sur sa reproduction.

On s'attache plus particulièrement dans la suite de ce document à décrire une problématique existante dans le domaine des réseaux de diffusion de télévision numérique, à laquelle ont été confrontés les inventeurs de la présente demande de brevet. L'invention ne se limite bien sûr pas à ce domaine particulier d'application, mais présente un intérêt pour toute technique de transmission ou de diffusion d'informations devant faire face à une problématique proche ou similaire.

Des réseaux de diffusion de télévision numérique, comme les réseaux TNT, mettant en oeuvre la norme DVB-T ("Digital Video Broadcasting - Terrestrial" pour "diffusion vidéo numérique terrestre"), sont aujourd'hui déployés en France, en Europe, et dans plusieurs autres Etats du monde. La diffusion de paquets de données est spécifiée par des standards de façon à être reçu par un grand nombre de récepteurs de tout type. Le réseau (terrestre, satellite ou câble) diffuse des documents audiovisuels dans des flux de données plus communément appelés « service » et des données destinées à les référencer. Ces données sont par exemple définies dans les spécifications DVB-SI ('Digital Video Broadcast - specification for Service Information') ou encore 'diffusion de vidéo numérique - spécification des Données de Service' EN 300 468 V1.3.1 (éditée par l'ETSI) et la norme «Technologies de l'information - Codage générique des images animées et du son associé : Système », référencée MPEG ISO/CEI 13818-1, 2nd édition publié le 1ier décembre 2000. Ces informations de service se présentent sous la forme de tables et de descripteurs qui décrivent les objets émis sur le réseau de transmission. Les documents diffusés selon le standard sont visualisés en temps réel par le récepteur.

Dès lors, un problème se pose lorsque le réseau transmet à la fois des documents en temps réel et des documents destinés à être téléchargés sans être reproduits par le récepteur en temps réel. Ces derniers ne peuvent être présentés dans un menu de sélection de programmes puisque leur reproduction en temps réel est impossible.

### 3. Objectifs de l'invention

La présente invention apporte une solution qui ne présente pas les inconvénients décrits plus haut, tout en proposant les avantages listés ci-dessus. La solution proposée permet de déterminer rapidement dans le flux défini par la norme DVB les services diffusant des documents en temps réel et des documents transmis sans contraintes temporelles. Ces derniers sont destinés à être enregistrés dès leur réception, et reproduits plus tard, lorsqu'ils auront été intégralement reçus.

### 4. Exposé de l'invention

La présente invention propose un dispositif de réception d'un flux multiplexé spécifié par la norme DVB-SI et organisé en paquets de données successifs comportant au moins un flux principal comportant une première table PAT identifiant au moins une première table PMT contenant au moins la liste des flux élémentaires d'un service audio et/ou visuel en cours de diffusion et destiné à être reproduit en temps réel. Le dispositif comporte un moyen de détermination dans le contenu de ladite première table PMT d'un descripteur listant des identificateurs (ou PID) de flux élémentaires constituant un flux secondaire, ledit flux secondaire transmettant au moins un document audiovisuel sans contrainte temporelle. Le dispositif reçoit le document audiovisuel en utilisant les données incluses dans le descripteur transmis dans le flux.

De cette manière, il est facile de distinguer les services transmis en temps réel et présents dans le flux principal, et les documents transmis sans contraintes temporelles car destinés à l'enregistrement et identifiés dans le descripteur.

L'invention propose, selon un mode particulier de réalisation, que le premier identificateur dudit descripteur est un identificateur d'une seconde table PAT identifiant une seconde table PMT, la seconde table PMT contient au moins la liste des identificateurs de flux élémentaires transmettant ledit document audiovisuel. De cette manière, la structure s'appuie sur la norme DVB pour identifier les documents transmis sans contrainte temporelle.

L'invention concerne également un procédé de génération d'un flux multiplexé spécifié par la norme DVB-SI et organisé en paquets de données successifs comportant au moins un flux principal comportant une première table PAT identifiant au moins une première table PMT contenant au moins la liste des flux élémentaires d'un service audio et/ou visuel en cours de diffusion et destiné à être reproduit en temps réel. Le procédé comporte une étape d'insertion dans ladite première table PMT du flux principal d'un descripteur listant des identificateurs de flux élémentaires constituant un flux secondaire, ledit flux secondaire transmettant au moins un document audiovisuel sans contrainte temporelle.

L'invention propose, selon un mode particulier de réalisation, que le numéro de l'identificateur de la première table PAT est 0, le numéro de l'identificateur de la seconde table PAT est différent de 0. De cette manière, il est aisé de distinguer la table PAT décrivant le flux principal de la table PAT qui identifie les documents transmis sans contraintes temporelles.

Selon un autre mode de réalisation, des indications temporelles déterminent le début et/ou la fin de la transmission du flux secondaire transmettant ledit document audiovisuel sont insérées dans le flux multiplexé. De cette manière, le terminal de réception peut facilement programmer l'enregistrement du document audiovisuel.

Selon un autre mode de réalisation, des indications temporelles déterminant le début et/ou la fin de la validité dudit document audiovisuel. De cette manière, il est possible de contrôler la disponibilité du document au sein d'un récepteur. Selon un autre mode de réalisation, une indication de priorité permettant de définir l'ordre d'effacement des documents audiovisuels enregistrés dans un récepteur lorsqu'il n'y a pas assez de place pour mémoriser un nouveau document, est insérée dans le flux multiplexé. De cette manière, il est possible de gérer à distance l'occupation de la mémoire des récepteurs.

Selon un autre mode de réalisation, un indicateur pouvant prendre l'une au moins des valeurs signalant les états suivants : début de transmission d'un document audiovisuel au cours d'une durée déterminée, transmission d'un document audiovisuel en cours, arrêt non définitif de la transmission d'un document audiovisuel, est inséré dans le flux multiplexé. De cette manière, il est possible d'informer les récepteurs de l'état actuel de la transmission du document audiovisuel.

Selon un aspect matériel, l'invention concerne un dispositif de génération d'un flux multiplexé spécifié par la norme DVB-SI et organisé en paquets de données successifs comportant au moins un flux principal comportant une première table PAT identifiant au moins une première table PMT contenant au moins la liste des flux élémentaires d'un service audio et/ou visuel en cours de diffusion et destiné à être reproduit en temps réel. Le dit dispositif comporte un moyen d'insertion dans le contenu de ladite première table PMT du flux principal d'un descripteur listant des identificateurs de flux élémentaires constituant un flux secondaire, ledit flux secondaire transmettant au moins un document audiovisuel sans contrainte temporelle.

L'invention concerne aussi un produit programme d'ordinateur comprenant des instructions de programme pour l'exécution du procédé de génération d'un flux multiplexé.

### 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre l'arborescence des identificateurs de flux (PID) définis par la norme DVB pour la mise en oeuvre de l'invention selon un premier exemple de réalisation,
- la figure 2 représente un descripteur de table PMT décrivant un exemple de structure pour la transmission de documents audiovisuels sans contrainte temporelle,
- la figure 3 représente une partie d'un descripteur de table EIT décrivant des données supplémentaires pour la transmission et l'enregistrement de documents audiovisuels,
- la figure 4 décrit un exemple de serveur pour la génération des flux multiplexés,

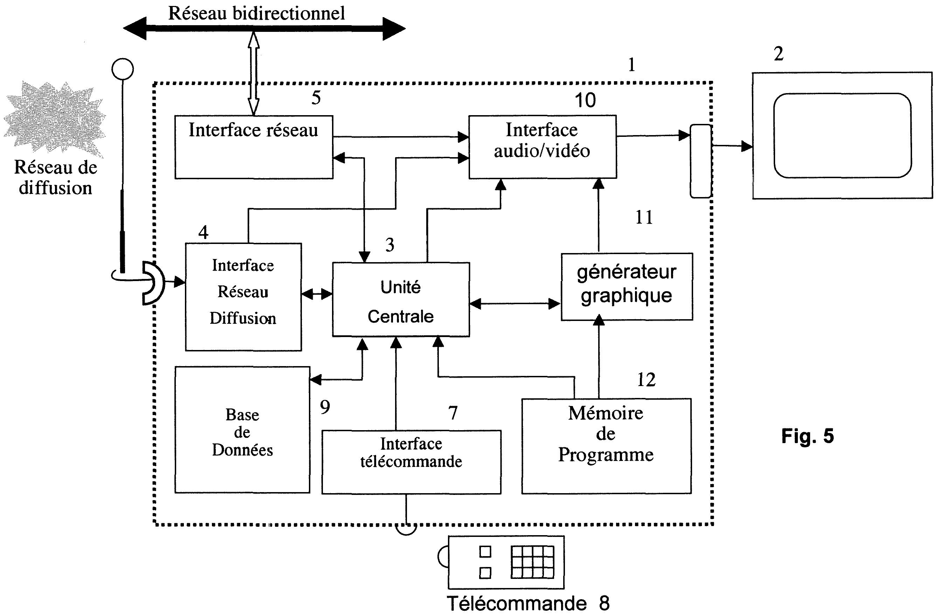

- la figure 5 décrit un exemple de récepteur audiovisuel pour la réception des flux multiplexés,
- la figure 6 présente un chronogramme de l'émission des tables EIT et la succession des états de transmission, selon un exemple de réalisation.
- la figure 7 présente un ensemble de paquets constituant un groupe pour la transmission d'un ensemble de données,
- la figure 8 présente un ensemble de paquets constituant un groupe pour la transmission d'un ensemble de données selon un autre mode de réalisation,
- la figure 9 représente un descripteur de table pour la transmission ou la diffusion d'un flux sécurisé.

### 6. Description d'un mode de réalisation de l'invention

### 6.1 Principe général

L'invention se situe dans le contexte de l'émission et la réception de contenus audio et/ou visuel en mode « PUSH ». Le mode « PUSH » signifie que le document est transmis sans les contraintes temporelles permettant sa reproduction en temps réel lors de sa réception. Un document transmis en mode PUSH est d'abord enregistré dans la mémoire du récepteur, puis suite à une commande de l'utilisateur, il est reproduit en extrayant les données de la mémoire. L'invention propose de rajouter certains champs dans des descripteurs actuels qui décrivent les contenus actuellement diffusés dans un réseau audiovisuel, ces champs permettent d'identifier des contenus audio et/ou visuel qui sont ou seront transmis en mode PUSH. Le récepteur des descripteurs est ainsi informé par les descripteurs de l'existence des contenus et peut programmer des dispositifs internes afin de les enregistrer.

Dans un premier temps, des exemples de descripteurs vont être exposés, puis dans un second temps, les dispositifs d'émission et de réception des flux contenant lesdits descripteurs et les documents audiovisuels, le dispositif de récepteur étant capable d'enregistrer ledit contenu et de le reproduire à la demande d'un utilisateur.

### 6.2 Description des données transmises

### 6.2.1 Présentation générale des tables

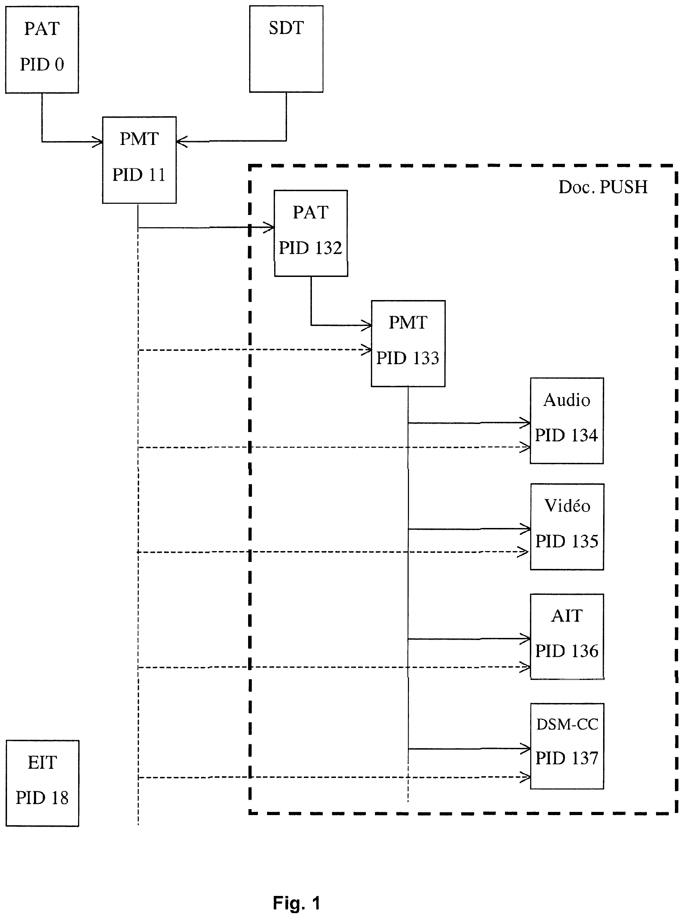

La figure 1 décrit la signalisation permettant d'identifier un document transmis sur un réseau de diffusion (terrestre, satellite ou câble) en mode PUSH. Le réseau de diffusion est appelé « NET_BROAD ». Les paquets de données des contenus audio et/ou visuels sont transmis conformément à un standard, par exemple celui défini par les spécifications MPEG-PSI et DVB-SI. Les données se présentent sous la forme de tables et de descripteurs qui décrivent les objets (services, évènements, TS, ... ) émis sur le réseau NET_BROAD. Les standards MPEG-PSI et DVB_SI spécifient notamment les tables suivantes : NIT, SDT, EIT, PAT, PMT. La table NIT définit la structure générale du réseau et indique la liste des flux de transport (ou TS en abrégé, acronyme de « Transport Stream» en langue anglo-saxonne) et des services diffusés. La table SDT donne des informations supplémentaires relatives aux services, par exemple le nom en clair d'un service. La table EIT indique une liste d'événements pour chaque service. Elle permet notamment d'indiquer l'événement en cours de diffusion. La table PAT liste toutes les tables PMT et donc tous les services présents dans le flux multiplexé. La table PMT contient la liste des flux élémentaires (un PID identifie chaque flux élémentaire du service), ces flux élémentaires constituent un service donné (exemple : liste des langages audio, vidéo, sous-titre disponible). La table PMT contient toutes les informations nécessaires pour sélectionner ce service. Lors de l'installation des services, le récepteur recherche sur le réseau la table NIT pour y extraire les informations des canaux du réseau, puis le récepteur se positionne sur chaque canal pour en extraire la table SDT afin d'obtenir pour ce canal la liste des services avec leur nom et leur identificateur de service. Chaque table définie par un identificateur de table spécifique, contient un descripteur qui spécifie la taille et la nature de chaque champ composant les paquets de données associés à une table. Ces tables sont émises à intervalle régulier dans le flux de données, par exemple, une table PAT est émise en moyenne toutes les 0.1 secondes, d'autres tables peuvent être émises dans des intervalles de temps d'une durée supérieure.

Le standard DVB n'identifie pas d'une façon particulière un document transmis en mode PUSH dans un flux multiplexé. Ce document a notamment la particularité d'être diffusé à une vitesse différente de celle du temps réel. Ainsi, un tel document peut être transmis à un débit supérieur à celui de la diffusion normale et de ce fait peut être téléchargé plus rapidement que les contenus diffusés à des fins de reproduction en temps réel. La transmission de documents en PUSH peut s'effectuer de façon continue, par la réservation continuelle d'un certain débit, ou discontinue, par la réservation d'un certain débit au cours de certaines heures de la journée ou de la nuit. Le débit réservé pour la transmission de documents en PUSH peut être variable dans le temps.

La solution décrite prend également en compte les contraintes introduites par le parc d'équipements existants aussi bien au niveau récepteur qu'au niveau des têtes de réseaux. Selon un exemple d'implémentation de l'invention, la table SDT indique la présence d'un service transmettant des documents en mode PUSH. Les récepteurs peuvent ainsi déterminer et présenter à l'utilisateur une liste de services diffusés en temps réels et de services transmettant des documents en mode PUSH. Une fois un service sélectionné, le récepteur recherche la table PMT correspondant à ce service afin d'en extraire les flux élémentaires.

La figure 1 décrit selon, un exemple particulier de réalisation, la façon de signaler le document transmis en mode PUSH au sein d'un service. Les paquets transmettant ce document forment un flux secondaire incluant des flux élémentaires transmettant : les tables PAT, PMT, des paquets de vidéo, des paquets d'audio, les éventuelles applications associées à ce document, ... La structure d'un flux transmettant un document en PUSH est identique à celle d'un flux diffusant un service en temps réel. Les identificateurs ou PID des flux élémentaires d'un document transmis en mode PUSH sont listés dans le descripteur spécifique au flux en mode PUSH contenu dans la table PMT du flux principal. Les traits en pointillé sur la figure 1 indiquent les PID pointés via le descripteur spécifique.

De cette façon, aucun protocole spécifique n'étant utilisé, la méthode de transmission comportent notamment les avantages :
- Il n'y a pas d'encapsulation des données diffusées. De ce fait, il n'y a donc pas de réduction du débit utile.
- La construction du flux multiplexé peut être réalisée avec des équipements de multiplexage « standards ».

Selon la norme, une seule table PAT décrivant les services disponibles est présente dans le flux multiplexé et cette table possède le numéro « 0 ». L'identification des flux transmettant des documents en PUSH s'effectue avec une autre table PAT possédant un autre numéro différent de « 0 », c'est le numéro « 132 » dans la figure 1. De cette façon, le récepteur ne considère pas cette table comme la PAT du flux principal mais comme une table appartenant à une structure de données. Ainsi, en ne faisant pas apparaître la structure du flux secondaire dans le flux principal, les récepteurs ne détectent pas les flux secondaires comme des services vidéo transmis en temps réel. Les flux vidéo et audio du document en mode PUSH n'apparaissent pas directement dans le flux principal, ce qui évite que les multiplexeurs de l'émetteur touchent à la signalisation. L'émetteur n'a pas besoin de modifier les PID des paquets transmettant le document en mode PUSH, ainsi la signalisation interne des flux composant le document transmis en mode PUSH reste cohérente au moment de son enregistrement dans un récepteur.

### 6.2.2 Présentation de la table PMT

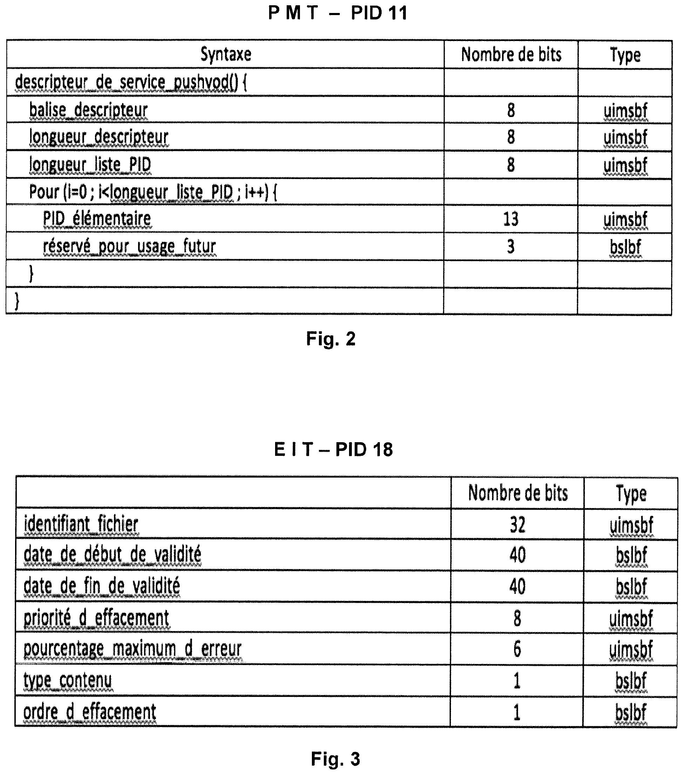

La figure 2 présente un exemple de descripteur de table PMT décrivant un service transmettant un document en mode PUSH. Ce descripteur contient un ou plusieurs descripteurs « PUSH_service_descriptor » identifiant les flux élémentaires des documents en PUSH. Ces descripteurs constituent une liste ordonnée d'éléments qui sont insérés dans la première boucle de la PMT. Le premier élément de la liste est le PID de la table PAT (identifié avec le numéro « 132 »), le second est le PID de la table PMT (numéro 133) identifiant un document transmis dans un premier flux secondaire, les autres éléments identifient les flux secondaires (audio, vidéo, AIT, ...). Cette liste permet aux récepteurs de connaître la liste des flux PID à enregistrer pour s'assurer de l'intégrité du document audiovisuel transporté dans le flux secondaire. Le titre « PID_list_length » désigne la longueur en octets de la boucle suivante contenant la liste des PID constituant le document transmis en mode PUSH. Le titre « Elementary_PID » désigne un PID identifiant le document transmis en PUSH. La PMT décrite à la figure 2 peut éventuellement contenir une référence vers une table AIT permettant d'associer un service interactif avec le document.

### 6.2.3 Présentation de la table EIT

La table EIT décrivant le document transmis en PUSH contient notamment les éléments suivants :
- données d'enregistrement :
   - start_time : début de diffusion du document,
   - duration : durée réel du document,
   - running_status : status de la diffusion.
- Metadonnées dans les descripteurs :
   - content_descriptor (optionnel) : type de document (par exemple : drame, comédie.. - la liste complète des attributs est spécifiée dans ETSI EN 300 468 V1.11.1 page 40. Le récepteur peut utiliser ce champ pour filtrer les documents à enregistrer,
   - parental_rating_descriptor,
   - short_event_descriptor : nom de fichier + description courte (option),
   - extended_event_descriptor (option) : extension du type de document.

La figure 3 présente d'autres éléments de la table EIT propres à l'invention. Ces éléments permettent notamment d'identifier le document transmis en mode PUSH et de programmer son enregistrement au niveau du récepteur. Ces éléments sont les suivants (liste non exhaustive) :
- file_identifier : Identifiant à utiliser pour accéder au fichier via l'API HbbTV. Par exemple : ServiceID + EventID
- validity_start_date : Date de début de validité du document.
- validity_end_date : Date de fin de validité du document.
- erasing_priority : Valeur de priorité définie par la tête de réseau. Cette valeur est utilisée pour la gestion de l'espace disque du récepteur. Dans le cas où le disque serait plein, sur réception d'un document de priorité p, un ou plusieurs documents de priorité inférieurs à p sont supprimés de façon à libérer de la place et à permettre l'enregistrement d'un nouveau document.
- max_error_percentage : pourcentage d'erreurs acceptable. En cas de réception d'un document avec un pourcentage d'erreur supérieur à celui indiqué, ce document n'est pas conservé.
- content_type : Type de document (par exemple : gratuit ou payant)
- erasing_order : Ordre d'effacement. Cet ordre permet de supprimer un document du disque dur des équipements. Exemple : un document adulte a été diffusé sans que la signalisation spécifique ait été associée. L'EIT contenant l'identifiant de ce document est rediffusée avec le flag « Ordre d'effacement » à 1. En recevant cette EIT, les équipements suppriment immédiatement le document enregistré.

Il a été dit précédemment que les informations contenues dans la table PMT identifient les différents flux secondaires transmettant le document en PUSH. Un récepteur utilise les informations de cette table pour détecter la présence de tels documents et éventuellement, les présenter à l'utilisateur dans un menu afin qu'il puisse programmer leurs enregistrements. Ce menu est une possibilité qui n'exclue pas que le récepteur effectue lui-même l'enregistrement de tous les documents afin de les proposer ultérieurement à l'utilisateur.

### 6.2.4 Présentation de la table SDT

Une table SDT associée à un document transmis en PUSH comprend notamment un ou plusieurs des descripteurs suivants :
- Component_descriptor :
   - component_type : description du document des flux (MPEG4 AVC,MP2...) la liste complète est dans la norme ETSI EN 300 468 V1.11.1 page 37.
- Service_descriptor :
   - service_type : PUSH_VOD (à ajouter dans la table 81 de la norme ETSI EN 300 468),
   - running_status : utilisé pour les services non continus.
- CA_identifier_descriptor : identification du Contrôle d'Accès (s'il est utilisé).

La table PAT associée à un document transmis en PUSH possède une structure classique, mais n'est pas identifiée avec un PID numéro 0 qui est réservé à la PAT du flux principal. La fréquence de transmission de la PAT est compatible avec le standard DVB lors de la relecture du flux TS après enregistrement. Par contre, il n'y a pas de contrainte de temps réel sur sa fréquence de diffusion lors de la transmission du document en PUSH.

### 6.3 Description d'un émetteur de flux

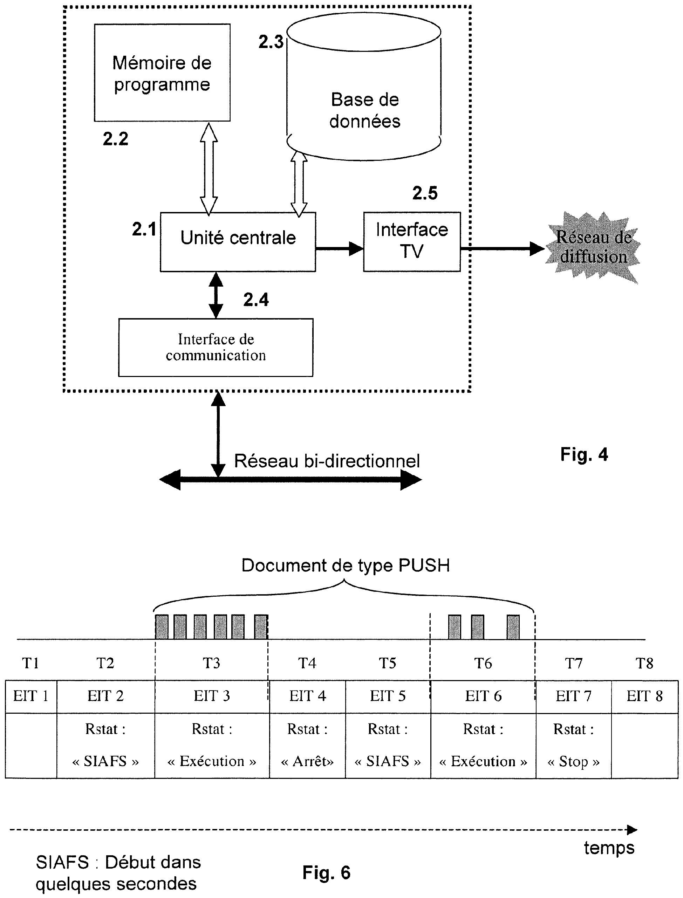

Les flux principaux et secondaires sont émis par un serveur communément appelé « tête de réseau », Un exemple de serveur 20 est illustré par la figure 4, selon un mode préféré de réalisation.

Le serveur 20 comprend notamment une unité centrale ALU 2.1, une mémoire de programme MP 2.2 dans laquelle au moins un programme d'encodage est enregistré, une base de données DB 2.3 et une interface de communication I/O NET 2.4 pour échanger des données de façon bidirectionnelle à travers le réseau 6 avec des récepteurs décrits par la suite. Le serveur 20 peut disposer d'une interface I/O TV 2.5 vers un réseau de diffusion NET_BROAD pour émettre de façon unidirectionnelle des documents audiovisuels. Le serveur 20 reçoit les documents audiovisuels à diffuser et les mémorise dans sa base de données DB 2.3. Puis, le serveur 20 organise la diffusion et la transmission des documents vers les récepteurs 1. Avant l'émission, et éventuellement lors de l'enregistrement, les documents sont encodés dans des paquets de données selon le format défini par un standard, DVB par exemple. Les paquets de données sont diffusés vers un réseau de diffusion NET_BROAD à travers l'interface réseau 2.5, ou vers un réseau bidirectionnel 6 afin d'être téléchargés à la demande d'un récepteur 1.

La base de données DB 2.3 contient à la fois les documents diffusés en temps réel et destinés à être immédiatement reproduits lors de leur réception, et les documents transmis en mode PUSH sans contrainte temporelle. Les documents peuvent être enregistrés dans la base de données selon un format indépendant du mode de diffusion. Le serveur 20 multiplexe les paquets des flux principaux et les paquets des flux secondaires en fonction des contraintes du réseau de diffusion. Avant son émission, le serveur change le PID de la PAT du document en mode PUSH qui ne doit pas être numéroté « 0 ».

### 6.4 Description d'un récepteur de flux

La figure 4 présente un exemple de réalisation d'un récepteur audiovisuel 1 connecté à un dispositif d'affichage 2, selon un mode préféré de réalisation. Le récepteur audiovisuel 1 qui est par exemple un décodeur comprend une unité centrale ALU 3 reliée à une mémoire de programme MP 12, des moyens de réception I/O TV 4 tels qu'un démodulateur et un démultiplexeur pour recevoir des données numériques provenant d'un réseau de diffusion NET_BROAD à l'aide d'une antenne de réception. Le moyen de réception I/O TV 4 permet de recevoir des services audiovisuels diffusés sur des canaux hertziens. Selon un mode particulier de réalisation, le récepteur 1 peut être doté d'une interface I/O NET 5 pour la communication avec un réseau numérique NET_BI 6 à accès large bande permettant de transmettre des flux de données. Ce réseau est par exemple Internet. Le récepteur 1 comprend en outre une interface de signaux infrarouge I/O Rem 7 pour recevoir les signaux d'une télécommande REM 8, une mémoire DB 9 pour le stockage des données de service, et une logique de décodage audio/vidéo I/O A/V 10 pour la génération des signaux audiovisuels envoyés à l'écran de télévision 2. Le récepteur 1 comprend également un circuit OSD 11 d'incrustation de données (de l'Anglais "On Screen Display" (signifiant littéralement "affichage sur l'écran"). Le circuit OSD 11 est un générateur de texte et de graphisme qui permet d'afficher à l'écran des menus de guide de programme, des pictogrammes ou des images.

Le récepteur 1 peut communiquer à travers son interface de communication I/O NET 5 et le réseau NET_BI 6, avec un ou plusieurs serveurs 20 dont un exemple de réalisation est décrit par la figure 4.

Le récepteur 1 analyse le contenu de la table SDT et détermine le PID de la table PMT décrivant les documents transmis en mode PUSH (c'est le PID numéro 11 tel qu'illustré par la figure 1). Selon un mode de réalisation particulier, lors de l'enregistrement du document dans la mémoire DB 9, le récepteur met le PID de la PAT à la valeur 0. Ainsi, la structure d'un document enregistré dans la mémoire DB 9 est identique à celle d'un service diffusé.

Les documents audio et/ou vidéo transmis en PUSH sont filtrés et mémorisés dans le récepteur sous forme de fichiers TS contenant des flux MPEG 2 ou MPEG 4, SD ou HD. Selon un mode particulier de réalisation, chaque TS possède les mêmes caractéristiques que les flux diffusés en TNT. Dans ce cas, la reproduction des documents enregistrés s'effectue sans ajout d'un décodeur supplémentaire dans la mémoire du récepteur.

### 6.5 Déroulement d'un enregistrement

Pour déclencher un enregistrement, le récepteur 1 analyse les paquets EIT et détecte les PID signalant la transmission d'un document en PUSH. Lors de la réception de chaque paquet EIT, le récepteur détermine si le document associé est destiné à l'enregistrement. Si le type et/ou l'identifiant correspond à un document à enregistrer, le récepteur programme le début de l'enregistrement en utilisant l'heure du champ « Start_time » spécifiée dans l'EIT. La référence temporelle utilisée est identifiée dans le contenu de la table TDT. Au moment de l'heure de début spécifiée, le récepteur 1 enregistre le contenu des PID signalés dans la PMT du document. L'enregistrement se poursuit tant que le document est spécifié dans l'EIT et que le champ « running_status » est à la valeur « run ».

Par défaut, le nom du fichier stocké dans le récepteur est celui du champ « event_name_char » du descripteur « short_event_descriptor ».Ce nom de fichier peut être utilisé pour faire le lien, au niveau de l'interface utilisateur, entre les fichiers vidéo et les métadonnées associées. Afin que le début et la fin des documents transmis soient correctement enregistrés par les récepteurs 1, le serveur 20 ne transmet les paquets du document que N secondes après que l'heure d'enregistrement indiquée ait été atteinte dans la TDT. De même, le document en cours de transmission est signalé comme terminé dans l'EIT que « N » secondes après que la fin de la diffusion des paquets à enregistrer.

La figure 6 illustre le déroulement de la transmission d'un document en mode PUSH.

A l'instant T1, la table EIT1 en cours de diffusion ne donne pas d'indication sur la transmission d'un document en mode PUSH. A T2, la table EIT2 décrit la présence prochaine d'un document dans le flux multiplexé en positionnant le champ « Running Status » à la valeur SIAFS (« starts in a few seconds ») signalant qu'un document va être transmis dans quelques secondes. De cette manière, le récepteur 1 peut préparer l'enregistrement. A l'instant T3, le document est transmis et le champ « Running Status » de l'EIT3 est positionné à la valeur « Run ». Si la bande passante est insuffisante pour transmettre le document et puisque celui-ci n'a pas de contraintes de temps réel, sa diffusion peut alors être arrêtée, le champ « Running_status » de l'EIT4 est alors positionné à la valeur « Pausing » (temps T4). Lors de la reprise de la transmission du document identifié dans l'EIT5, le champ « running_status » dans l'EIT passe de la valeur « Pause» à la valeur « SIAFS » (T5), puis à la valeur « Run » (T6) juste avant l'envoi des premiers paquets du document. Lorsque la transmission est terminée, le champ « Running_status » de l'EIT7 est positionné à la valeur « Stop» pendant une durée déterminée, quelques secondes puis à l'instant T8, plus aucune indication sur la présence de ce document n'apparaît dans l'EIT8.

A l'issue de la réception des documents transmis en PUSH, le récepteur 1 possède dans sa mémoire 9 une liste de documents prêts à être reproduits. Le menu de présentation des documents enregistrés peut être propre au récepteur ou être transmis selon le standard HbbTV par exemple. Si l'application est diffusée, elle peut être signalée dans la PMT du service et être enregistrée avec les données audio et/ou vidéo. De cette manière, les documents transmis en mode PUSH sont accessibles à partir d'applications HbbTV associées à un programme « Live » proposé par exemple par des chaînes de télévision.

### 6.5 Transmission sécurisé d'un document

Selon un mode particulier de réalisation, les documents sont transmis dans des paquets de donnée par le serveur 20, quels que soit leurs contraintes en temps. Il s'avère que dans le flux reçu des paquets peuvent être manquants ou défectueux, il importe donc de les identifier facilement. En utilisant des identificateurs de paquets, il est possible de les recevoir à nouveau afin de reconstituer un contenu complet et intègre dans la mémoire du récepteur 1.

Les données transmises par le réseau (terrestre, satellite ou câble) et contenant notamment des contenus audio et/ou visuels sont par exemple définies dans les spécifications DVB-SI. Les données se présentent sous la forme de tables et de descripteurs qui décrivent les objets émis sur le réseau de diffusion NET_BROAD. Un service est une suite ininterrompue d'événements diffusés sur un flux déterminé. Les standards DVB_SI et MPEG-SI spécifient notamment les tables suivantes : NIT, SDT, EIT, PAT, PMT. La table NIT définit la structure générale du réseau et indique la liste des flux de transport et des services diffusés. La table SDT donne des informations supplémentaires relatives aux services, par exemple le nom en clair d'un service. La table EIT indique une liste d'événements pour chaque service. Elle permet notamment d'indiquer l'événement en cours de diffusion. La table PAT associe une table PMT à un service. La table PMT contient la liste des flux élémentaires contenue dans un service (exemple : liste des langages audio, vidéo, sous-titre disponible) et contient toutes les informations nécessaires pour sélectionner ce service avec les flux élémentaires désirés (un PID identifie chaque flux élémentaire du service). Lors de l'installation des services, le récepteur va chercher sur le réseau la table NIT pour y extraire les informations des canaux du réseau, puis le récepteur va se positionner sur chaque canal pour y extraire la table SDT afin d'obtenir pour ce canal la liste des services avec leur nom et leur identificateur de service. Chaque table est définie par un ensemble de descripteurs qui spécifie la taille et la nature de chaque champ composant les paquets de données associés à une table. Ces tables sont émises à intervalle régulier dans le flux de données, par exemple, une table PAT est émise en moyenne toutes les 0.1 secondes, d'autres tables peuvent être émises dans des intervalles de temps d'une durée supérieure.

A l'issue de l'installation, le récepteur 1 possède dans sa mémoire 9 une liste de services, chaque service étant identifié par un identificateur unique, le triplet DVB formé avec les trois éléments : l'identificateur du réseau, l'identificateur du canal fréquentiel, l'identificateur du service diffusé sur ce canal. Grâce aux tables PAT et PMT diffusant des listes de triplet DVB, le récepteur est capable de rechercher le flux qui diffuse le service désiré par l'utilisateur. Chaque table étant continuellement mise à jour, il est important de rester à l'écoute des paquets et de constituer en permanence une version à jour des tables en cours de diffusion.

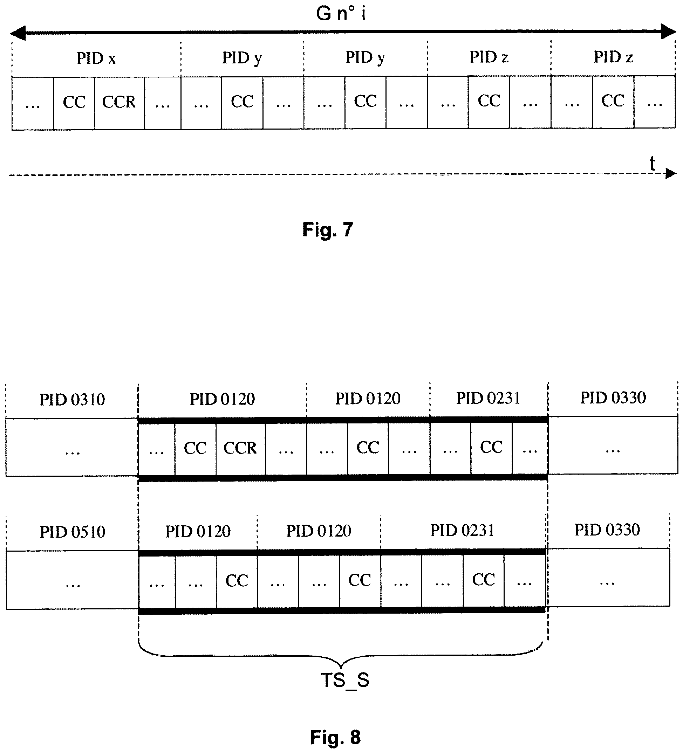

La figure 7 présente l'émission séquentielle de plusieurs paquets d'un même TS au fil du temps. Chaque paquet du TS est identifié par son en-tête ou PID. Par exemple, un flux de données de type audiovisuel peut comporter cinq types de paquets :
- Table PAT : valeur des PID : 0310
- Table PMT : valeur des PID : 0510
- contenu vidéo : valeur des PID : 0120
- contenu audio piste 1 : valeur des PID : 0231
- contenu audio piste 2 : valeur des PID : 0330

Ces paquets sont émis continuellement et forment eux-mêmes des flux secondaires, l'ensemble des flux secondaires constitue le flux de données audiovisuel principal.

Selon un premier mode de réalisation, tous les paquets d'un TS contiennent un champ appelé compteur de continuité (ou CC en abrégé) propre au système de façon à sécuriser ce TS. Ce compteur de continuité contient un nombre de bits suffisamment grand pour ne pas reboucler trop vite, typiquement ce champ a une taille de 32 bits. La valeur du compteur au cours d'une boucle est incrémentée lors de la génération de chaque paquet à protéger dans le flux, de sorte qu'au cours d'une boucle complète du compteur de continuité, chaque paquet du flux sécurisé peut être référencé par la valeur du compteur de continuité. De cette manière, lorsque le récepteur 1 a besoin de recevoir certains paquets, il peut utiliser la valeur de ce compteur pour les identifier. Ce compteur est stocké dans le champ privé de l'entête de chaque paquet comme spécifié par la norme.

Les paquets d'un flux sécurisé sont regroupés en groupe (ou « Chunk » en Anglais), le nombre « n » de paquets dans un groupe est défini dans un descripteur spécifique. Une valeur de contrôle d'intégrité (ou « checksum » en Anglais et CRC en abrégé) est calculée pour chaque groupe et insérée dans un paquet de chaque groupe. Selon un mode particulier de réalisation, le calcul de CRC peut être réalisé en masquant certaines parties des paquets, et notamment ceux dont la valeur est susceptible d'être modifiée lors du transport du flux (comme les PCR et le compteur de continuité sur 4 bits défini dans le standard MPEG). Un bit du compteur CC appelé « CRC_Chunk_Flag » est réservé pour identifier les paquets qui contiennent une valeur de CRC, ce bit est typiquement le plus significatif (Bit 31). Si la valeur de ce bit est à « 1 », alors le paquet associé contient le Checksum du groupe auquel appartient ce paquet. Les données CC et CRC sont installées dans des champs définis comme propriétaires par la norme. Le compteur de continuité est indépendant de tout système de multiplexage, de ce fait sa valeur n'est pas modifiée par les couches applicatives servant à l'émission des paquets dans les flux sécurisés.

Ce mode particulier de réalisation décrit un procédé de génération d'un flux multiplexé organisé en paquets de données successifs comportant au moins une composante de données et au moins une composante d'informations de service, chacune des composantes est identifiée au niveau desdits paquets par un identificateur de paquet. Selon ce mode de réalisation, un tel procédé comprend :
- une étape de détermination par les identificateurs de paquets d'un flux dit sécurisé formé des paquets d'au moins une composante du flux multiplexé,
- une étape d'association de chaque paquet du flux sécurisé avec une valeur d'un compteur incrémenté pour chaque paquet dudit flux sécurisé,
- une étape de découpage du flux sécurisé en groupes composés d'un nombre déterminé de paquets dont les valeurs de compteurs associées sont consécutives,
- une étape de calcul d'une valeur d'intégrité à partir des données contenues dans les paquets de chaque groupe, et
- une étape d'insertion de la valeur de compteur associée au sein de chaque paquet du flux sécurisé et de la valeur d'intégrité au sein d'un paquet de chaque groupe.

En utilisant ce mode, il est possible d'identifier chaque paquet d'un flux sécurisé et d'utiliser cet identificateur pour partitionner les paquets de façon à vérifier l'intégrité d'un groupe de paquets.

La figure 7 représente un groupe G de numéro « i » comprenant 5 paquets. Chaque paquet possède sa propre valeur de compteur de continuité. Le groupe Gi contient un paquet dont le PID possède la valeur « x », 2 paquets dont les PID ont la valeur « y », et 2 paquets dont les PID ont la valeur « z ». Le premier paquet dont la valeur de PID est « x », contient la valeur du Checksum du groupe dans le champ CRC.

Les données d'un même flux peuvent transiter par des chemins différents au sein d'un réseau et de ce fait ont des délais de transmission différents. De ce fait, le réseau ne garantit pas le respect de l'ordre de réception des paquets. Le récepteur 1 utilise la valeur de CC comme identificateur de paquet pour ordonnancer les paquets dans l'ordre défini par le compteur de continuité. De cette façon, le récepteur génère en interne un flux ordonné de paquets dont les valeurs de compteur de continuité se suivent. Lorsqu'un nombre important de paquets sont reçus et mis en ordre en fonction de CC, alors le récepteur peut découper le flux ordonné de paquets consécutifs afin d'élaborer les groupes. Dans chaque groupe, la valeur du CRC est extraite du paquet dont le bit CRC_Chunk_Flag est à « 1 ». Cette valeur est comparée au Checksum recalculé à partir de toutes les données des paquets du groupe. En cas d'égalité, les paquets de données reçus sont considérés intègres, sinon au moins un paquet du groupe est manquant ou altéré. Dans ce cas, l'ensemble des paquets d'un groupe est considéré comme douteux et le récepteur émet une alarme informant de ce fait. Selon un mode particulier de réalisation, le récepteur qui détecte l'absence ou l'altération des paquets d'un groupe va tenter de solutionner ce problème en exécutant des actions pour reconstituer les données du groupe. Plusieurs actions sont envisageables au niveau du récepteur 1.

Selon un premier mode de réalisation, chaque paquet du flux sécurisé contient un drapeau appelé « Broadband Connection Flag » ou BCF en abrégé, indiquant si les paquets ayant ce PID sont rediffusés ultérieurement. Supposons que le récepteur 1 analyse les paquets reçus et constate que certains sont altérés ou manquants. En testant la valeur du drapeau BCF, le récepteur 1 détermine s'il peut attendre une prochaine rediffusion des paquets ayant ce PID. Lorsque la valeur du drapeau BCF est « 0 », alors le contenu sera rediffusé par la suite, le récepteur liste dans sa mémoire tous les groupes contenant des paquets manquants ou altérés et, au moment de la rediffusion, filtre les paquets listés et les enregistre en mémoire. Chaque groupe listé est identifié par la valeur du CC du premier paquet.

Selon une variante de réalisation, le récepteur 1 élabore une requête de téléchargement spécifique à l'adresse URL qui est contenue dans le descripteur du TS. Ce mode de réalisation est notamment mis en oeuvre lorsque les données ne seront plus rediffusées (valeur du drapeau BCF est « 1 »). Dans la requête de téléchargement, le récepteur indique la valeur de CC du premier paquet et le nombre de paquets à recevoir, ou les valeurs de CC du premier et du dernier paquet à recevoir. En réponse à une requête de téléchargement, le serveur 20 élabore un fichier contenant tous les paquets demandés et le transmet au récepteur 1 qui a émis la requête. Le fichier contenant les paquets demandés est envoyé au récepteur 1 par une connexion de type « HTTP Streaming », par exemple. Quelle que soit la façon de les recevoir, le récepteur 1 contrôle la bonne réception des paquets et les enregistre dans sa mémoire 9. Le récepteur réitère des requêtes de réception jusqu'à ce que l'ensemble des paquets constituant le contenu audio et/ou visuel soient enregistrés et contrôlés. Une fois les contenus enregistrés, l'utilisateur du récepteur 1 peut naviguer dans un menu listant les différents contenus disponibles dans la mémoire 9 et peut, à l'aide de la télécommande REM 8, commander la reproduction d'un contenu sélectionné.

Selon un autre variante de réalisation, il est possible d'adopter plusieurs stratégies afin de limiter les requêtes de téléchargements à certains paquets manquants ou altérés. De cette manière, l'utilisation de la bande passante de la connexion entre le récepteur 1 et le serveur 20 est optimisée. Si la liaison 6 dispose d'un faible débit, il est préférable d'anticiper et de commencer à reconstituer des données intègres dans la mémoire 9. Dans ce cas, seules les N premières minutes du contenu audio et/ou visuel (5 minutes par exemple) sont reconstituées. Le reste du contenu n'est pas corrigé consécutivement à la réception mais sera téléchargé en temps réel au moment où le contenu est effectivement lu de la mémoire et reproduit. Le fait d'avoir corrigé les premières minutes permet de les utiliser comme une mémoire tampon. Au cours de la lecture de ces premières minutes, le récepteur 1 effectue des requêtes de téléchargement vers le serveur 20 des paquets manquants ou altérés qui se situent dans les minutes suivantes.

Dans le cas où la liaison 6 est à haut débit, le récepteur 1 peut attendre la lecture effective du contenu enregistré en mémoire 9 pour effectuer en temps réel des requêtes de téléchargements des paquets manquants ou altérés.

Dans tout ce qui vient d'être écrit, il n'est pas exclu qu'un groupe Gi contienne un seul paquet (n = 1). Dans ce cas, chaque paquet dispose de son propre CRC (le bit CRC_Chunk_Flag est donc toujours à « 1 »). Ce mode particulier de réalisation permet de contrôler parfaitement si un paquet est intègre, et dans la négative, de ne recevoir que les paquets manquants ou altérés.

Tous les paquets d'un flux sécurisé transmis dans un canal de communication dispose d'un compteur CC, mais les paquets d'autres flux peuvent être transmis dans ce canal, ces autres paquets ne contiennent pas de compteur CC. Lors de la réception du contenu, le récepteur 1 filtre les paquets d'un même TS, en fonction de la valeur des PID. Puis, le récepteur remet en ordre les paquets en fonction de la valeur de CC et détermine les groupes afin de contrôler leurs intégrités à l'aide de la valeur CRC.

Selon un mode particulier de réalisation, il est possible de ne sécuriser qu'une partie des paquets d'un flux. De cette façon, l'insertion des valeurs de CC et CRC est minimisée et ainsi la bande passante est mieux utilisée. La liste des PID des paquets sécurisés du flux est incorporée dans un champ spécifique du descripteur du TS. La figure 8 illustre ce mode de réalisation. Dans l'exemple illustré, seuls les paquets dont les PID ont les valeurs prises dans l'ensemble de valeurs : (0120, 0231) constitue le flux sécurisé noté TS_S sur la figure 8. Les paquets dont les PID ont les valeurs : 0310, 0510, 0330 ne sont pas sécurisés. Comme précédemment, un groupe de paquets sécurisés contient n = 5 paquets, de sorte que tous les cinq paquets, le récepteur 1 reçoit une valeur de CRC et peut vérifier l'intégrité du groupe.

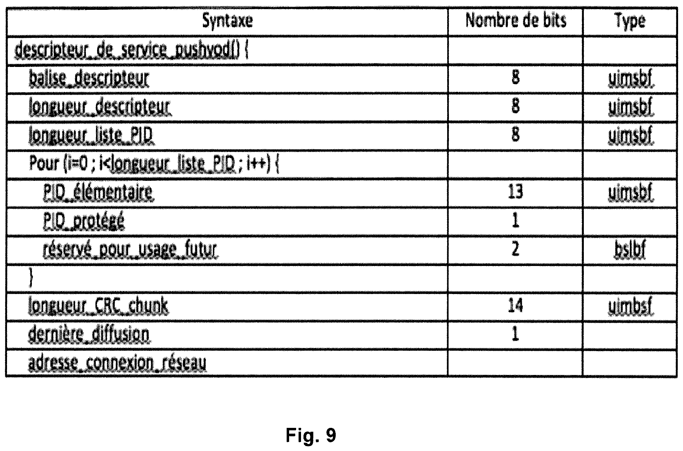

La figure 9 illustre un exemple de descripteur d'un flux sécurisé selon le standard défini par les spécifications DVB-SI. Un récepteur 1 reçoit les descripteurs décrivant les différents TS dans les tables PMT et peut ainsi filtrer les paquets correspondant à chaque TS. Un descripteur de flux sécurisé comprend notamment :
- valeurs des PIDs des paquets sécurisés,
- longueur d'un groupe de paquets sécurisés,
- taille du Checksum des groupes de paquets sécurisés,
- URL permettant de télécharger des paquets identifiés, ...

En utilisant les descripteurs transmis dans le flux, le récepteur 1 détermine la nature des différents TS et le format des paquets transmis dans ces TS. Le récepteur peut ainsi extraire facilement les valeurs de CC et CRC. Le descripteur illustré à la figure 9 est donné à titre d'exemple, la position et la taille des différents champs CC et CRC peuvent varier en fonction des standards de transmission utilisés.

## Revendications

1. Dispositif (1) de réception d'un flux multiplexé spécifié par la norme DVB-SI et organisé en paquets de données successifs comportant au moins un flux principal comportant une première table PAT possédant un PID égal à 0 et identifiant au moins une première table PMT contenant au moins la liste des flux élémentaires d'un service audio et/ou visuel en cours de diffusion et destiné à être reproduit en temps réel, **caractérisé en ce qu'**il comporte :
- un moyen de détermination (3, 12) dans le contenu de ladite première table PMT d'un PID d'une table ayant la structure d'une table PAT et ayant un PID différent de celui de la première table PAT, d'un PID d'une seconde table PMT et d'une pluralité de descripteurs identifiant les flux élémentaires constituant un flux secondaire, ledit flux secondaire transmettant au moins un document audiovisuel sans contraintes temporelles et destiné à être enregistré,
- un moyen de réception (4 ; 5, 3, 12) dudit document audiovisuel en utilisant les données incluses dans ledit descripteur transmis dans le flux,
- un moyen d'enregistrement de ladite table ayant la structure d'une table PAT en changeant son PID par la valeur 0.

2. Procédé de génération d'un flux multiplexé spécifié par la norme DVB-SI et organisé en paquets de données successifs comportant au moins un flux principal comportant une première table PAT possédant un PID égal à 0 identifiant au moins une première table PMT contenant au moins la liste des flux élémentaires d'un service audio et/ou visuel en cours de diffusion et destiné à être reproduit en temps réel,
**caractérisé en ce qu'**il comporte une étape d'insertion dans ladite première table PMT du flux principal d'un PID d'une table ayant la structure d'une table PAT et ayant un PID différent de celui de la première table PAT, d'un PID d'une seconde table PMT et d'une pluralité de descripteurs identifiant les flux élémentaires constituant un flux secondaire, ledit flux secondaire transmettant au moins un document audiovisuel sans contraintes temporelles et destiné à être enregistré, le PID de ladite table ayant la structure d'une table PAT étant destiné à être changé avec la valeur 0 au niveau d'un récepteur recevant ledit flux.

3. Procédé de génération d'un flux multiplexé selon la revendication 2 ; **caractérisé en ce qu'**il comporte une étape d'insertion d'indications temporelles déterminant le début et/ou la fin de la transmission du flux secondaire transmettant ledit document audiovisuel.

4. Procédé de génération d'un flux multiplexé selon l'une quelconque des revendications 2 ou 3 ; **caractérisé en ce qu'**il comporte une étape d'insertion d'au moins une indication temporelle déterminant le début et/ou la fin de la validité dudit document audiovisuel.

5. Procédé de génération d'un flux multiplexé selon l'une quelconque des revendications 2 à 4 ; **caractérisé en ce qu'**il comporte une étape d'insertion d'une indication de priorité permettant de définir l'ordre d'effacement des documents audiovisuels enregistrés dans un récepteur lorsqu'il n'y a pas assez de place pour mémoriser un nouveau document.

6. Procédé de génération d'un flux multiplexé selon l'une quelconque des revendications 2 à 5 ; **caractérisé en ce qu'**il comporte une étape d'insertion d'un indicateur pouvant prendre l'une au moins des valeurs signalant les états suivants : début de transmission d'un document audiovisuel au cours d'une durée déterminée, transmission d'un document audiovisuel en cours, arrêt non définitif de la transmission d'un document audiovisuel.

7. Dispositif (20) de génération d'un flux multiplexé spécifié par la norme DVB-SI et organisé en paquets de données successifs comportant au moins un flux principal comportant une première table PAT identifiant au moins une première table PMT contenant au moins la liste des flux élémentaires d'un service audio et/ou visuel en cours de diffusion et destiné à être reproduit en temps réel, **caractérisé en ce qu'**il comporte :
- un moyen d'insertion (2.1, 2.2) dans le contenu de ladite première table PMT du flux principal d'un PID d'une table ayant la structure d'une table PAT et ayant un PID différent de celui de la première table PAT, d'un PID d'une seconde table PMT et d'une pluralité de descripteurs identifiant les flux élémentaires constituant un flux secondaire, ledit flux secondaire transmettant au moins un document audiovisuel sans contraintes temporelles et destiné à être enregistré, le PID de ladite table ayant la structure d'une table PAT étant destiné à être changé avec la valeur 0 dans le récepteur.

8. Produit programme d'ordinateur téléchargeable depuis un réseau de communications et/ou stocké sur un support lisible par ordinateur et/ou exécutable par une unité centrale, **caractérisé en ce qu'**il comprend des instructions de programme pour la mise en oeuvre d'au moins une étape du procédé de génération d'un flux multiplexé selon l'une quelconque des revendications 2 à 6.

## Patentansprüche

1. Vorrichtung (1) zum Empfangen eines Multiplexstroms, der durch die Norm DVB-SI spezifiziert ist und in aufeinanderfolgenden Datenpaketen organisiert ist, umfassend mindestens einen Hauptstrom, umfassend eine erste Tabelle PAT, welche einen PID gleich 0 aufweist und mindestens eine erste Tabelle PMT identifiziert, die mindestens die Liste elementarer Ströme eines Audio- und/oder visuellen Diensts enthält, der aktuell verbreitet wird und dazu bestimmt ist, in Echtzeit wiedergegeben zu werden, **dadurch gekennzeichnet, dass** diese umfasst:
- ein Mittel (3, 12) zum Bestimmen, im Inhalt der ersten Tabelle PMT, eines PID einer Tabelle mit der Struktur einer Tabelle PAT und mit einem PID, der von jenem der ersten Tabelle PAT verschieden ist, eines PID einer zweiten Tabelle PMT und mehrerer Deskriptoren, welche die elementaren Ströme identifizieren, die einen sekundären Strom darstellen, wobei der sekundäre Strom mindestens ein audiovisuelles Dokument überträgt, ohne temporale Begrenzungen und das dazu bestimmt ist, registriert zu werden,
- ein Mittel (4; 5, 3, 12) zum Empfangen des audiovisuellen Dokuments unter Verwendung der Daten, die in dem Deskriptor enthalten sind, der in dem Strom übertragen wird,
- ein Mittel zum Registrieren der Tabelle mit der Struktur einer Tabelle PAT durch Ändern ihres PID durch den Wert 0.

2. Verfahren zum Generieren eines Multiplexstroms, der durch die Norm DVB-SI spezifiziert wird und in aufeinanderfolgenden Datenpaketen organisiert wird, umfassend mindestens einen Hauptstrom, umfassend eine erste Tabelle PAT, welche einen PID gleich 0 aufweist und mindestens eine erste Tabelle PMT identifiziert, die mindestens die Liste elementarer Ströme eines Audio- und/oder visuellen Diensts enthält, der aktuell verbreitet wird und dazu bestimmt ist, in Echtzeit wiedergegeben zu werden, **dadurch gekennzeichnet, dass** dieses umfasst: einen Schritt des Einsetzens, in die erste Tabelle PMT, des Hauptstroms eines PID einer Tabelle mit der Struktur einer Tabelle PAT und mit einem PID, der von jenem der ersten Tabelle PAT verschieden ist, und mehrerer Deskriptoren, welche die elementaren Ströme identifizieren, die einen sekundären Strom darstellen, wobei der sekundäre Strom mindestens ein audiovisuelles Dokument überträgt, ohne temporale Begrenzungen und das dazu bestimmt ist, registriert zu werden, wobei der PID der Tabelle mit der einer Tabelle PAT dazu bestimmt ist, mit dem Wert 0 auf der Ebene eines Empfängers verändert zu werden, der den Strom empfängt.

3. Verfahren zum Generieren eines Multiplexstroms nach Anspruch 2, **dadurch gekennzeichnet, dass** dieses einen Schritt des Einsetzens temporaler Anzeigen umfasst, die den Beginn und/oder das Ende der Übertragung des sekundären Stroms bestimmen, der das audiovisuelle Dokument überträgt.

4. Verfahren zum Generieren eines Multiplexstroms nach einem der Ansprüche 2 oder 3, **dadurch gekennzeichnet, dass** dieses einen Schritt des Einsetzens mindestens einer temporalen Anzeige umfasst, die den Beginn und/oder das Ende der Übertragung des sekundären Stroms bestimmt, der das audiovisuelle Dokument überträgt.

5. Verfahren zum Generieren eines Multiplexstroms nach einem der Ansprüche 2 bis 4, **dadurch gekennzeichnet, dass** dieses einen Schritt des Einsetzens einer Prioritätsanzeige umfasst, die es ermöglicht, die Reihenfolge des Löschens von audiovisuellen Dokumenten zu definieren, die in einem Empfänger registriert sind, wenn nicht genug Platz zum Speichern eines neuen Dokuments vorhanden ist.

6. Verfahren zum Generieren eines Multiplexstroms nach einem der Ansprüche 2 bis 5, **dadurch gekennzeichnet, dass** dieses einen Schritt des Einsetzens eines Indikators umfasst, der mindestens einen der Werte annehmen kann, welche die folgenden Zustände signalisieren: Beginn der Übertragung eines audiovisuellen Dokuments während einer bestimmten Dauer, laufende Übertragung eines audiovisuellen Dokuments, nicht definitives Anhalten der Übertragung eines audiovisuellen Dokuments.

7. Vorrichtung (20) zum Generieren eines Multiplexstroms, der durch die Norm DVB-SI spezifiziert ist und in aufeinanderfolgenden Datenpaketen organisiert ist, umfassend mindestens einen Hauptstrom, umfassend eine erste Tabelle PAT, welche mindestens eine erste Tabelle PMT identifiziert, die mindestens die Liste elementarer Ströme eines Audio- und/oder visuellen Diensts enthält, der aktuell verbreitet wird und dazu bestimmt ist, in Echtzeit wiedergegeben zu werden, **dadurch gekennzeichnet, dass** diese umfasst:
- ein Mittel (2, 1, 2.2) zum Einsetzen, in den Inhalt der ersten Tabelle PMT, des Hauptstroms eines PID einer Tabelle mit der Struktur einer Tabelle PAT und mit einem PID, der von jenem der ersten Tabelle PAT verschieden ist, und mehrerer Deskriptoren, welche die elementaren Ströme identifizieren, die einen sekundären Strom darstellen, wobei der sekundäre Strom mindestens ein audiovisuelles Dokument überträgt, ohne temporale Begrenzungen und das dazu bestimmt ist, registriert zu werden, wobei der PID der Tabelle mit der Struktur einer Tabelle PAT dazu bestimmt ist, mit dem Wert 0 in dem Empfänger verändert zu werden.

8. Computerprogrammprodukt, welches aus einem Kommunikationsnetz heruntergeladen und/oder auf einem computerlesbaren und/oder von einer Zentraleinheit ausführbaren Medium gespeichert werden kann, **dadurch gekennzeichnet, dass** dieses Programminstruktionen zur Durchführung mindestens eines Schritts des Verfahrens zum Generieren eines Multiplexstroms nach einem der Ansprüche 2 bis 6 umfasst.

## Claims

1. A device (1) for receiving a multiplexed stream specified by the DVB-SI standard and organised in successive data packets comprising at least one main stream comprising a first PAT table having a PID equal to 0 and identifying at least one first PMT table containing at least the list of elementary streams of an audio and/or visual service currently being broadcast and intended to be reproduced in real time, **characterised in that** it comprises:
- a means for determination (3, 12) in the content of said first PMT table a PID of a table having the structure of a PAT table, and having a PID that is different from that of the first PAT table, a PID of a second PMT table and a plurality of descriptors identifying the elementary streams constituting a secondary stream, said secondary stream transmitting at least one audio-visual document without time constraints and intended to be recorded,
- a reception means (4; 5, 3, 12) for said audio-visual document using the data included in said descriptor transmitted in the flow,
- a recording means of said table having the structure of a PAT table by changing its PID by the value 0.

2. A method for generating a multiplexed stream specified by the DVB-SI standard and organised in successive data packets comprising at least one main stream comprising a first PAT table having a PID equal to 0 identifying at least one first PMT table containing at least the list of elementary streams of an audio and/or visual service currently being broadcast and intended to be reproduced in real time,
**characterised in that** it comprises a step of insertion in said first PMT table of the main stream a PID of a table having the structure of a PAT table and having a PID different from that of the first PAT table, a PID of a second PMT table and a plurality of descriptors identifying the elementary flows constituting a secondary stream, said secondary stream transmitting at least one audio-visual document without time constraints and intended to be recorded, the PID of said table having the structure of a PAT table being intended to be changed with the value 0 at the level of a receiver receiving said stream.

3. The method for generating a multiplexed flow according to claim 2, **characterised in that** it comprises a step for insertion of time indications determining the start and/or the end of the transmission of the secondary flow transmitting said audio-visual document.

4. The method for generating a multiplexed flow according to either claim 2 or 3, **characterised in that** it comprises a step of inserting at least one time indication determining the start and/or end of the validity of said audio-visual document.

5. The method for generating a multiplexed flow according to any one of claims 2 to 4, **characterised in that** it comprises a step of inserting a priority indication allowing definition of the order of deletion of the audio-visual documents recorded in a receiver when there is insufficient space to record a new document.

6. The method for generating a multiplexed flow according to any one of claims 2 to 5, **characterised in that** it comprises a step of inserting an indicator able to take at least one of the values indicating the following states: start of transmission of an audio-visual document for a determined duration, transmission of an audio-visual document in progress, non-definitive stop to the transmission of an audio-visual document.

7. A device (20) for generating a multiplexed stream specified by the DVB-SI standard and organised in successive data packets comprising at least one main stream comprising a first PAT table identifying at least one first PMT table containing at least the list of elementary streams of an audio and/or visual service currently being broadcast and intended to be reproduced in real time, **characterised in that** it comprises:
- a means for insertion (2.1, 2.2) in the content of said first PMT table of the main stream of a PID, of a table having the structure of a PAT table and having a PID that is different from that of the first PAT table, a PID of a second PMT table and a plurality of descriptors identifying the elementary streams constituting a secondary stream, said secondary flow transmitting at least one audio-visual document without time constraints and intended to be recorded, the PID of said table having the structure of a PAT table being intended to be changed with the value 0 in the receiver.

8. Computer program product downloadable from a communications network and/or stored on a machine-readable support and/or executable by a central processor unit, **characterised in that** it comprises program instructions for implementing at least one step of the method for generating a multiplexed stream according to any one of claims 2 to 6.
